# EUROPEAN PATENT SPECIFICATION

(11) **EP 4 138 512 B1**
(45) Date of publication and mention of the grant of the patent: **16.07.2025**
(21) Application number: 21192165.5
(22) Date of filing: 19.08.2021
(51) Int. Cl.: H04W 84/18, H04B 7/155, H04W 84/04, H04W 84/12, H04W 88/10

(54) **A WI-FI MESH NETWORK**
WI-FI-MESH-NETZWERK
RÉSEAU MAILLÉ WI-FI

(43) Date of publication of application: 22.02.2023
(73) Proprietor: Advanced Digital Broadcast S.A., 1293 Bellevue (CH)
(72) Inventor: CICHONSKI, Dariusz, 65-119 Zielona Gora (PL)
(74) Representative: Kancelaria Eupatent.pl Sp. z.o.o

(56) References cited:
- US-A1- 2020 359 266

## Description

### TECHNICAL FIELD

The present invention relates to a Wi-Fi mesh network.

### BACKGROUND

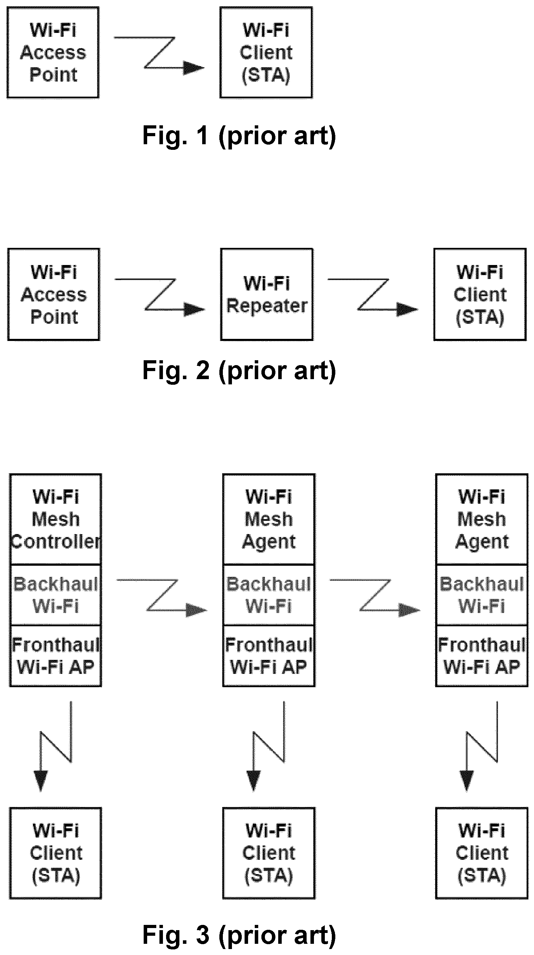

Wi-Fi networks become more and more popular. New Wi-Fi bands are developed, such as the 6GHz bands. Wi-Fi networks have a few usage scenarios that determinate connection topologies. The most popular is an infrastructure connection, shown in Fig. 1, wherein a single access point (AP) can be connected to one or more Wi-Fi clients, often called stations (STA). While the access points are typically stationary devices settled in one place, the stations could be stationary or mobile (i.e. changing their positions). This simple topology has a number of disadvantages, such as a lack of a good enough signal in the place where the station is located. One of the main reasons for that is high radio waves attenuation caused by walls and other obstacles in a building environment.

One of the possible solutions that help to solve this problem is by using of a repeater, as shown in Fig. 2. The repeater is a Wi-Fi device that receives signals from the access point and directly resends them to the station and vice versa. Thus, even if the access point doesn't see directly the station, a stable connection is possible. However, in this topology, transmission throughput is reduced because the repeater listens to the access point for half of its operating time and sends data to the station for the other half of its operating time. Other factors could impact the throughput as well.

Another solution is a mesh network, as shown in Fig. 3. A typical mesh network may consist of a mesh controller and one or more mesh agents. Fig.3 presents mesh components connected in a daisy chain manner. However, a star connection (where all mesh agents are connected directly to the mesh controller) is also possible, as well as mixed connections (i.e. a daisy chain and a star at the same time). The mesh controller controls a behavior of an entire network. Each mesh controller includes a mesh agent and mesh agents are also implemented as standalone devices. Each mesh agent includes two or more separate Wi-Fi radios. Each radio may communicate over more than one channel. The first Wi-Fi radios crate a so-called backhaul connection that allows communication between the mesh controller and the agents, as well between the agents. However, the backhaul is not accessible to regular stations. The second W-Fi radios operate as standard access points and allow regular stations to be connected to them.

US2020359266A1 discloses a backhaul bandwidth management method for a wireless network. In that method, firstly, a backhaul connection mode is adjusted by a network device in a backhaul network according to a wireless capability. Then, a backhaul guaranteed bandwidth is guaranteed by the network device according to at least one of a dedicated service set identifier (SSID), a dedicated radio frequency (RF) band and a dedicated wireless mode. Then, a bandwidth allocation algorithm is executed by the network device to ensure that at least one backhaul transmission connection has the backhaul guaranteed bandwidth. Finally, a backhaul SSID is set to a first wireless network standard only mode by the network device to ensure that data transmission will not be interfered with by other network devices transmitting data according to a second wireless network standard in the backhaul network.

### SUMMARY

There is a need to provide improved solutions that would allow increase in bandwidth usage for Wi-Fi networks.

The object of the invention is a Wi-Fi mesh network. The network comprises mesh controller comprising: a backhaul interface configured to communicate via a backhaul channel as a mesh controller; and a fronthaul interface configured to communicate via a fronthaul channel as an access point. The network further comprises at least one mesh agent comprising: a backhaul interface configured to communicate via the backhaul channel as a mesh agent; and a fronthaul interface configured to communicate via the fronthaul channel as an access point. Moreover, the network comprises at least one standard client, comprising a fronthaul interface configured to communicate via the fronthaul channel as a client and at least one dedicated client comprising a backhaul interface configured to communicate via the backhaul channel as a client.

An advantage of this configuration is that since the dedicated clients communicate over the backhaul channel, there is no need to transmit data of the dedicated clients over both the fronthaul channel and the backhaul channel, as for the standard clients.

The network may further comprise at least one dedicated repeater client comprising: a backhaul interface configured to communicate via the backhaul channel as a client; and a repeater module configured to provide signal repeating functionality for data over the backhaul channel.

An advantage of this configuration is that the dedicated repeater clients may allow access to the backhaul channels for other dedicated clients which are too remote from the mesh controller or the mesh agents to communicate directly with them, while still maintaining the efficient usage of the backhaul channel, in contrast to a standard scenario where standard clients would communicate via repeaters over a fronthaul channel (and which would require duplication of data transmission over the backhaul channel). This also reduces the needed number of mesh agents and allows extending range of distance between the mesh controller and the most distant dedicated clients. Using a dedicated repeater client further allows also for entire system cost reduction.

The dedicated repeater client may be a digital television set-top box device.

The dedicated client is a digital television set-top box device.

The digital television set-top boxes are devices which are typically stationary and well known to the network infrastructure operator and can be easily and securely deployed and communicated over the backhaul channel. Any other devices can be used as well, as long as they have a WiFi interface.

The backhaul channel can be a wireless channel or a wired channel.

The digital television set-top boxes, as stationary devices, are typically installed next to the wired network infrastructure and therefore can be easily connected to that infrastructure and take advantage of communication over the wired backhaul channel instead of using resources of wireless fronthaul channel. Moreover, it is possible that some of the devices within the network use a wireless backhaul channel, while other devices use a wired backhaul channel.

The invention also relates to a device configured to operate as the dedicated client or as the dedicated repeater client within the mesh network as described herein.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

### BRIEF DESCRIPTION OF DRAWINGS

The present invention will be shown by means of example embodiments on a drawing, wherein:
Fig. 1 shows a topology of a basic Wi-Fi infrastructure;
Fig. 2 shows a topology of a Wi-Fi infrastructure with a repeater;
Fig. 3 shows a topology of a mesh network;
Fig. 4 shows a first topology of a Wi-Fi infrastructure according to the invention;
Fig. 5 shows a second topology of a Wi-Fi infrastructure according to the invention.

### DETAILED DESCRIPTION OF EMBODIMENTS

The present invention is presented by means of an embodiment related to Wi-Fi networks as defined by the IEEE 802.11 family of standards. However, it may be also utilized with other similar wireless standards.

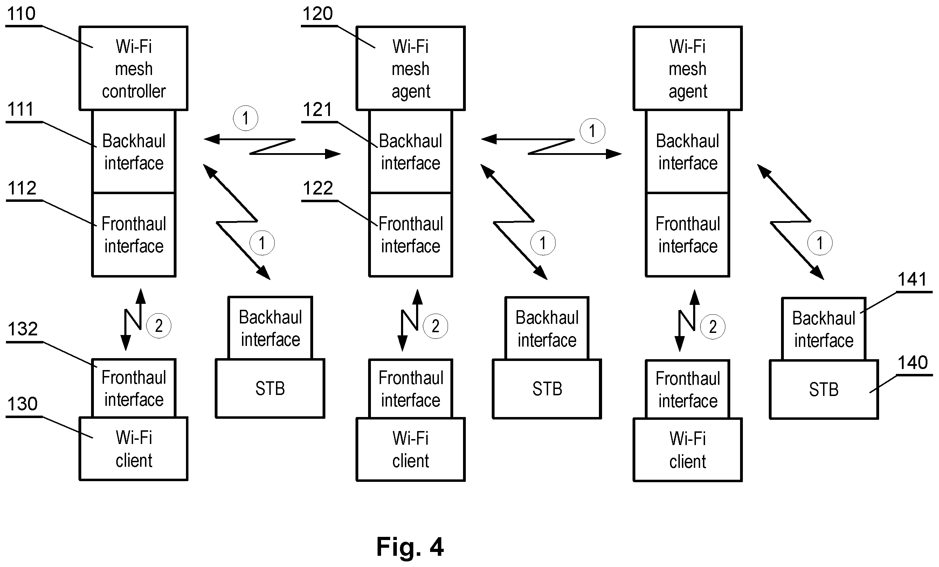

Fig. 4 shows a first topology of a Wi-Fi infrastructure according to the invention. A mesh controller 110 comprises a backhaul interface 111 configured to communicate via a backhaul channel 1 as a mesh controller and a fronthaul interface 112 configured to communicate via a fronthaul channel 2 as an access point. A plurality of mesh agents 120 are connected to the mesh controller 110, each comprising a backhaul interface 121 configured to communicate via the backhaul channel 1 as a mesh agent and a fronthaul interface 122 configured to communicate via the fronthaul channel 2 as an access point. A plurality of standard clients 130 communicate with the mesh controller 110 and the mesh agents 120, each client 130 comprising a fronthaul interface 132 configured to communicate via the fronthaul channel 2 as a client.

The network further comprises a plurality of dedicated clients 140 that are digital television set-top boxes (STB), each comprising a backhaul interface 141 configured to communicate via the backhaul channel 1 as a client.

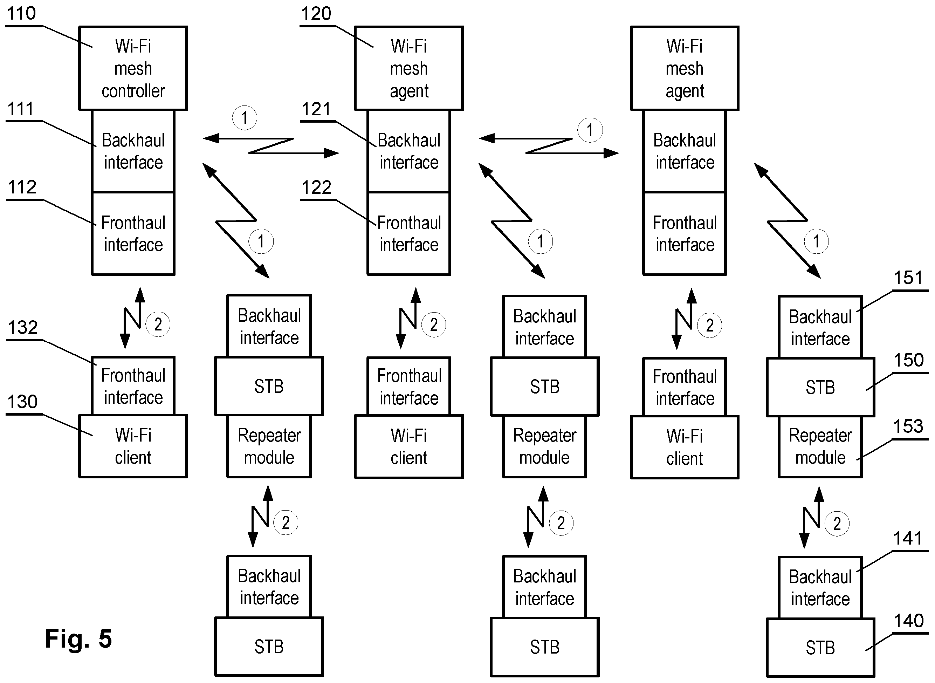

Fig. 5 shows a second topology of a Wi-Fi infrastructure according to the invention. It comprises the mesh controller 110, a plurality of mesh agents 120, a plurality of standard clients 130 and a plurality of dedicated clients 140 as described with respect to Fig. 4.

In addition, the network further comprises a plurality of dedicated repeater clients 150 that are digital television set-top boxes (STB), each comprising a backhaul interface 151 configured to communicate via the backhaul channel 1 as a client and a repeater module 153 configured to provide signal repeating functionality for data over the backhaul channel 1. The repeated client 150 device operates in a manner as known for repeater devices functionality, and in addition, in order to improve data transmission efficiency, once it receives a data packet, then before transmitting the data to the other devices 140 the repeated may check which part of the data is addressed to the repeater itself 150 and that data is disregarded from further retransmission. The device 140 may withhold sending data until it connects with the repeater 150.

For example, the network infrastructure as shown in Figs. 4 and 5 could be effectively implemented in a hotel facility. Hotel facilities often have a complicated mesh network because of a large space to be covered by the Wi-Fi signal and a high number of obstacles such as walls. They also need to support a high number of client devices, which are both hotel infrastructure devices (such as STBs) and visiting clients' devices. Therefore, if the STB devices are configured as dedicated client devices for the mesh network that could communicate over the backhaul channel, this significantly decreases the network bandwidth consumption, as the STB data are sent only via the backhaul channel. Moreover, if the STBs are also used as dedicated repeater client devices, this reduces the number of access points that would be needed to provide coverage for the STBs to operate within the Wi-Fi network.

Accordingly, the scope of protection is not limited to the preferred embodiments described in the specification, but is only limited by the claims that follow.

## Claims

1. A Wi-Fi mesh network comprising:
- a mesh controller (110) comprising:
- a backhaul interface (111) configured to communicate via a backhaul channel (1) as a mesh controller; and
- a fronthaul interface (112) configured to communicate via a fronthaul channel (2) as an access point;
- at least one mesh agent (120) comprising:
- a backhaul interface (121) configured to communicate via the backhaul channel (1) as a mesh agent; and
- a fronthaul interface (122) configured to communicate via the fronthaul channel (2) as an access point;
- at least one standard client (130), comprising a fronthaul interface (132) configured to communicate via the fronthaul channel (2) as a client;
**characterized in that** it further comprises:
- at least one dedicated client (140) comprising a backhaul interface (141) configured to communicate via the backhaul channel (1) as a client.

2. The Wi-Fi mesh network according to claim 1, further comprising at least one dedicated repeater client (150) comprising:
- a backhaul interface (151) configured to communicate via the backhaul channel (1) as a client; and
- a repeater module (153) configured to provide signal repeating functionality for data over the backhaul channel (1).

3. The Wi-Fi mesh network according to claim 2, wherein the dedicated repeater client (150) is a digital television set-top box device.

4. The Wi-Fi mesh network according to any of previous claims, wherein the dedicated client (140) is a digital television set-top box device.

5. The Wi-Fi mesh network according to any of previous claims, wherein the backhaul channel (1) is a wireless channel.

6. The Wi-Fi mesh network according to any of previous claims, wherein the backhaul channel (1) is a wired channel.

7. A device (140) configured to operate as the dedicated client (140) within the mesh network according to any of previous claims.

8. A device configured to operate as the dedicated repeater client (150) within the mesh network according to any of claims 2-6.

## Patentansprüche

1. Wi-Fi-Mesh-Netzwerk, umfassend:
- eine Mesh-Steuerung (110), umfassend:
- eine Backhaul-Schnittstelle (111), die konfiguriert ist, um über einen Backhaul-Kanal (1) als Mesh-Steuerung zu kommunizieren; und
- eine Fronthaul-Schnittstelle (112), die konfiguriert ist, um über einen Fronthaul-Kanal (2) als Zugangspunkt zu kommunizieren;
- zumindest ein Mesh-Mittel (120), umfassend:
- eine Backhaul-Schnittstelle (121), die konfiguriert ist, um über den Backhaul-Kanal (1) als Mesh-Mittel zu kommunizieren; und
- eine Fronthaul-Schnittstelle (122), die konfiguriert ist, um über den Fronthaul-Kanal (2) als Zugangspunkt zu kommunizieren;
- zumindest einen Standard-Client (130), der eine Fronthaul-Schnittstelle (132) umfasst, die konfiguriert ist, um über den Fronthaul-Kanal (2) als Client zu kommunizieren;
**dadurch gekennzeichnet, dass** es ferner Folgendes umfasst:
- zumindest einen dedizierten Client (140), der eine Backhaul-Schnittstelle (141) umfasst, die konfiguriert ist, um über den Backhaul-Kanal (1) als Client zu kommunizieren.

2. Wi-Fi-Mesh-Netzwerk nach Anspruch 1, ferner umfassend zumindest einen dedizierten Repeater-Client (150), umfassend:
- eine Backhaul-Schnittstelle (151), die konfiguriert ist, um über den Backhaul-Kanal (1) als Client zu kommunizieren; und
- ein Repeater-Modul (153), das konfiguriert ist, um Signalwiederholungsfunktionalität für Daten über den Backhaul-Kanal (1) bereitzustellen.

3. Wi-Fi-Mesh-Netzwerk nach Anspruch 2, wobei der dedizierte Repeater-Client (150) eine Digital-TV-Set-Top-Box-Vorrichtung ist.

4. Wi-Fi-Mesh-Netzwerk nach einem der vorhergehenden Ansprüche, wobei der dedizierte Client (140) eine Digital-TV-Set-Top-Box-Vorrichtung ist.

5. Wi-Fi-Mesh-Netzwerk nach einem der vorhergehenden Ansprüche, wobei der Backhaul-Kanal (1) ein drahtloser Kanal ist.

6. Wi-Fi-Mesh-Netzwerk nach einem der vorhergehenden Ansprüche, wobei der Backhaul-Kanal (1) ein verdrahteter Kanal ist.

7. Vorrichtung (140), die konfiguriert ist, um als der dedizierte Client (140) innerhalb des Mesh-Netzwerks nach einem der vorhergehenden Ansprüche zu arbeiten.

8. Vorrichtung, die konfiguriert ist, um als der dedizierte Repeater-Client (150) innerhalb des Mesh-Netzwerks nach einem der Ansprüche 2-6 zu arbeiten.

## Revendications

1. Réseau maillé Wi-Fi comprenant :
- un dispositif de commande de maillage (110) comprenant :
- une interface backhaul (111) configurée pour communiquer par l'intermédiaire d'un canal backhaul (1) en tant que dispositif de commande de maillage ; et
- une interface fronthaul (112) configurée pour communiquer par l'intermédiaire d'un canal fronthaul (2) en tant que point d'accès ;
- au moins un agent de maillage (120) comprenant :
- une interface backhaul (121) configurée pour communiquer par l'intermédiaire du canal backhaul (1) en tant qu'agent de maillage ; et
- une interface fronthaul (122) configurée pour communiquer par l'intermédiaire du canal fronthaul (2) en tant que point d'accès ;
- au moins un client standard (130), comprenant une interface fronthaul (132) configurée pour communiquer par l'intermédiaire du canal fronthaul (2) en tant que client ;
**caractérisé en ce qu'**il comprend en outre :
- au moins un client spécialisé (140) comprenant une interface backhaul (141) configurée pour communiquer par l'intermédiaire du canal backhaul (1) en tant que client.

2. Réseau maillé Wi-Fi selon la revendication 1, comprenant en outre au moins un client répéteur spécialisé (150) comprenant :
- une interface backhaul (151) configurée pour communiquer par l'intermédiaire du canal backhaul (1) en tant que client ; et
- un module répéteur (153) configuré pour fournir une fonctionnalité de répétition de signal pour les données sur le canal backhaul (1).

3. Réseau maillé Wi-Fi selon la revendication 2, ledit client répéteur spécialisé (150) étant un dispositif décodeur de télévision numérique.

4. Réseau maillé Wi-Fi selon l'une quelconque des revendications précédentes, ledit client spécialisé (140) étant un dispositif décodeur de télévision numérique.

5. Réseau maillé Wi-Fi selon l'une quelconque des revendications précédentes, ledit canal backhaul (1) étant un canal sans fil.

6. Réseau maillé Wi-Fi selon l'une quelconque des revendications précédentes, ledit canal backhaul (1) étant un canal filaire.

7. Dispositif (140) configuré pour fonctionner en tant que client spécialisé (140) à l'intérieur du réseau maillé selon l'une quelconque des revendications précédentes.

8. Dispositif configuré pour fonctionner en tant que client répéteur spécialisé (150) à l'intérieur du réseau maillé selon l'une quelconque des revendications 2 à 6.
